(19) Europäisches Patentamt
European Patent Office
Office européen des brevets

(11) Veröffentlichungsnummer: **0 042 816**
**B1**

(12) **EUROPÄISCHE PATENTSCHRIFT**

(45) Veröffentlichungstag der Patentschrift: **18.04.84**

(51) Int. Cl.³: **C 09 B 67/22**, C 09 B 67/04

(21) Anmeldenummer: **81810241.0**

(22) Anmeldetag: **15.06.81**

(54) **Verfahren zur Herstellung von Pigmentlegierungen.**

(30) Priorität: **19.06.80 CH 4718/80**

(43) Veröffentlichungstag der Anmeldung: **30.12.81 Patentblatt 81/52**

(45) Bekanntmachung des Hinweises auf die Patenterteilung: **18.04.84 Patentblatt 84/16**

(84) Benannte Vertragsstaaten: **CH DE FR GB IT LI**

(56) Entgegenhaltungen:
**EP - A - 0 009 720**
**FR - A - 2 084 891**
**FR - A - 2 415 128**
**US - A - 3 081 188**

(73) Patentinhaber: **CIBA-GEIGY AG, Postfach, CH-4002 Basel (CH)**

(72) Erfinder: **Bäbler, Fridolin, Dr., Nussbaumweg 19, CH-4123 Allschwil (CH)**
Erfinder: **Zwahlen, Günther, Landskronstrasse 12, CH-4143 Dornach (CH)**

**EP 0 042 816 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Pigmentlegierungen

Es ist bekannt, dass man durch Zusammenmahlen verschiedener Metall-, Metalloxid- oder Metallcarbidpulver in Hochleistungskugelmühlen zu sogenannten Superlegierungen gelangt, die sich im Handel befinden („Scientific American", 234/5, S. 40 [1976]).

Es ist ferner bekannt, dass man bei farblich und strukturell sehr nahe verwandten Pigmenten durch Mahlen oder Umfällen aus Schwefelsäure Mischkristalle erzeugen kann. So beschreibt die DE-OS Nr. 2842468 ein Verfahren zur Herstellung von Chinacridongemischen durch Erhitzen der Ausgangsstoffe in Gegenwart saurer Kondensationsmittel. Die so erhaltenen Pigmentgemische können einer Nassmahlung unterworfen werden. Nur ist dieses Verfahren auf strukturell sehr ähnliche Pigmente der Chinacridonreihe beschränkt.

Es ist ausserdem bekannt, dass das Vermischen von Pigmenten, die sich farblich und strukturell stark voneinander unterscheiden, zu trüben Nuancen führen kann.

In der DE-AS Nr. 2110999 wird ein Verfahren zur Herstellung von Cu-Phthalocyaninpigmenten durch Mischen von Cu-Phthalocyanin mit einem oder mehreren farbtönenden Pigmenten beschrieben, wonach man durch Umfällen in Schwefelsäure, durch Kochen oder durch trockenes Vermahlen von Cu-Phthalocyaninen mit Dioxazin-, Isoindolinon-, Indolizindion-, Azo- oder Thioindigoverbindungen Pigmentmischungen erhält, welche farbstärkere Blaufärbungen mit röteren Tönungen ergeben sollen.

Es hat sich gezeigt, dass nach dem letztgenannten Verfahren hergestellte Pigmentmischungen gewisse Vorteile bringen, jedoch in bezug auf Reinheit, Dispergierbarkeit in Kunststoffen und Gleichmässigkeit der Färbungen ungenügend sind.

Es wurde nun gefunden, dass man durch intensives Nassmahlen im Wasser von Pigmentmischungen, bestehend aus mindestens zwei sich durch wesentliche Strukturmerkmale unterscheidenden Pigmenten verschiedener Gruppen der Perylen-, Phthalocyanin-, Perinon-, Chinacridon-, Chinophthalon-, Isoindolinon-, Isoindolin-, Dioxazin-, Anthrachinon-, Thioindigo-, Azo-, Methin- oder Azomethinreihe, Pigmentlegierungen erhält, welche im Gegensatz zu gewöhnlichen Pigmentmischungen reinere Farbtöne, bessere applikatorische und günstigere physikalische Eigenschaften aufweisen.

Bei den Pigmenten der Phthalocyanin-, Methin- oder Azomethinreihe kommen sowohl die metallfreien Pigmente als auch die Metallkomplexe in Betracht.

Die als Ausgangsstoffe zu verwendenden Pigmente müssen zwei verschiedenen Pigmentgruppen angehören. Sie müssen sich durch wesentliche Strukturmerkmale und nicht lediglich durch die Art der Substituenten oder bei Metallkomplexen durch die Art des Metalles unterscheiden. Besonders gute Ergebnisse erzielt man durch Vermahlen von Pigmenten ähnlicher Härte, z.B. polycyclischen Pigmenten, wie Dioxazinen, Perylenen, Isoindolinonen, Chinacridonen und Phthalocyaninen miteinander.

Die Mengenverhältnisse der Pigmente zueinander können innerhalb weiter Grenzen schwanken. Auf 100 Gew.-Teile einer Pigmentmischung verwendet man vorzugsweise 0,1 bis 50 Gew.-Teile des Pigmentes der einen Gruppe und 50 bis 99,9 Gew.-Teile von mindestens einem Pigment der andern Gruppe.

Für die Ausgangspigmentmischung können die einzelnen Komponenten in mittel- bis feinkristalliner, bevorzugt jedoch grob- und mittel- bis feinkristalliner oder nur grobkristalliner Form vorliegen.

Die Nassmahlung erfolgt in Wasser. Bei Pigmenten, deren Synthese in wässerigem Medium erfolgt, ist es zweckmässig, die wässerigen Presskuchen der Nassmahlung zu unterwerfen.

Um die Mahlwirkung zu intensivieren, kann es vorteilhaft sein, die Nassmahlung in Gegenwart von zu entfernenden organischen Mahlhilfsmitteln durchzuführen. So kann man beispielsweise nach dem in der DE-OS Nr. 1209852 beschriebenen Verfahren die wässerige Nassmahlung besonders wirksam in Gegenwart einer weitgehend wasserunlöslichen, durch Sublimation oder Destillation mit Wasserdampf oder Extraktion wieder entfernbaren organischen Verbindung, insbesondere fester Kohlenwasserstoffe wie Naphtalin oder eines Chlorkohlenwasserstoffes, wie Hexachloräthan oder p-Dichlorbenzol, durchführen. Man verwendet dabei zweckmässig 0,5 bis 1,5 Teile des Mahlhilfsmittels und 1 bis 12 Teile Wasser auf 1 Teil Trockenpigmentmischung.

Als Mahlhilfsmittel können auch Produkt verbleibende organische Additive, wie Stearinsäure, Harzsäuren, beispielsweise Abietinsäure, hydrierte Abietinsäure, Harzsäureester, Derivate eines nieder- oder höhermolekularen Additions- oder Polymerisationsharzes, Wachse oder Polyäthylenglykole, verwendet werden. Man verwendet dabei zweckmässig 0,01 bis 0,30 Teile, bevorzugt jedoch geringe Mengen wie 0,01 bis 0,15 Teile, organisches Additiv bezogen auf 1 Teil Trockenpigmentmischung. Solche Additive können dabei zusätzlich die applikatorischen Eigenschaften der Pigmentlegierung verbessern.

Für die Durchführung des Verfahrens wird die Pigmentmischung, bevorzugt zusammen mit dem organischen Mahlhilfsmittel und/oder organischen Additiven in der Flüssigkeit suspendiert, einer intensiv wirkenden Nassmahlvorrichtung zugeführt.

Als Apparatur kann jede Vorrichtung verwendet werden, die es erlaubt, in einem flüssigen Medium die Pigmente und gegebenenfalls den Trägerstoff intensiven mechanischen Kraftwirkungen zu unterwerfen. Derartige Apparaturen sind in grösserer Zahl bekannt. Sie beruhen beispielsweise auf dem Prinzip eines in flüssigem Medium erzeugten grossen Geschwindigkeitsgradienten oder einer plötzlichen Richtungsänderung, oder insbesondere auf Aufprallwirkung oder gegenseitiger Reibung von Mahlkörpern, wie Metall-, Glas-, oder Porzellankugels, Kunststoffgranulat oder Sandkörner, die durch die Rotation des Gefässes, oder noch wirksamer, durch Schwingungserzeuger oder rührerartige Vorrichtungen, wie beispielsweise bei den Glaspermühlen, in Bewegung gesetzt werden.

Die Mahltemperatur ist innerhalb technisch vernünftiger Grenzen nicht kritisch, sollte jedoch bei der Verwendung von organischen Mahlhilfsmitteln unterhalb deren Schmelzpunkt liegen. Zweckmässig wird man die Mahlung bei Temperaturen zwischen 5 und 80°C, vorzugsweise bei Raumtemperatur durchführen. Änderungen im pH-Wert, beispielsweise Einstellung saurer oder alkalischer Pigmentsuspensionen, können in gewissen Fällen ebenfalls Vorteile bringen.

Die Nassmahlung wird so lange fortgesetzt, bis die Pigmente im Mikrobereich ineinanderlegiert sind. Dies dauert je nach Art der Mühle, der Zusammensetzung der Pigmentmischung und des eventuell verwendeten Mahlhilfsmittels ½ bis 24 h. Die Zeitdauer zur Erzielung der optimalen Eigenschaften der Pigmentlegierung, für die vorgesehene spezielle Verwendung, kann vom Fachmann leicht ermittelt werden. Durch die intensive Mahlung werden, wenn von grobkristallinen Pigmenten ausgegangen wird, die Pigmentkristalle stark zerkleinert. Die Pigmentlegierung kann je nach Zusammensetzung in röntgenamorph-ähnlichem Zustand vorliegen.

Die Aufarbeitung erfolgt auf die übliche Art durch Abtrennen der Mahlkörper und Isolieren der Pigmentlegierung durch Abfiltrieren der Pigmentsuspension und Trocknen. Bei der Verwendung von wieder zu entfernenden organischen Mahlhilfsmitteln werden diese zweckmässig nach dem Abtrennen der Mahlkörper z.B. durch Wasserdampfdestillation von der Pigmentsuspension, oder durch Sublimation beim Trocknen des Pigmentpresskuchens entfernt.

Der Trocknungsprozess wird auf die übliche Weise, beispielsweise im Vakumm- oder Umluftschrank, Schaufeltrockner, Wirbelschicht- oder Gefriertrockner oder auch Sprühtrockner, durchgeführt. Beim Trocknen von Pigmentpresskuchen treten häufig irreversible Agglomerationen ein, was sich in einer schlechten Dispergierbarkeit auswirkt. Überraschenderweise weisen erfindungsgemäss hergestellte Pigmentlegierungen in den meisten Fällen im Vergleich zu den separat gemahlenen reinen Pigmenten, trotz der grossen Feinheit der Partikel, eine wesentlich geringere irreversible Agglomeration beim Trocknen auf.

Die erfindungsgemäss erhaltenen Pigmentlegierungen eignen sich zum Pigmentieren von hochmolekularen Verbindungen, z.B. Celluloseäthern und -estern, wie Äthylcellulose, Acetylcellulose, Nitrocellulose, Polyamiden bzw. Polyurethanen oder Polyestern, natürlich Harzen oder Kunstharzen, z.B. Aminoplasten, insbesondere Harnstoff- und Melaminformaldehydharzen, Alkydharzen, Phenoplasten, Polycarbonaten, Polyolefinen, wie Polyäthylen, Polypropylen und Polystyrol, Polyvinylchlorid, Polyacrylnitril, Polyacrylsäureester, thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, die Pigmentlegierungen als Toner oder in Form von Präparaten zu verwenden.

Die erfindungsgemäss hergestellten Pigmentlegierungen lassen sich aufgrund der Möglichkeit der Erzeugung von speziellen physikalischen Eigenschaften auch in weiteren besonderen Applikationsgebieten einsetzen. Als Beispiel sei die Verwendung von Pigmentlegierungstonern auf dem Gebiete der Elektrophotographie, als Absorptionspigmente in Solarzellen oder als Katalysatoren für diverse chemische Reaktionen, beispielsweise Redox-Reaktionen, erwähnt. Pigmentlegierungstoner mit speziellen Eigenschaften, welche beispielsweise auch als elektrische Halbleiter verwendet werden können, erhält man zweckmässig, wenn man Pigmentmischungen, enthaltend a) Pigment mit Elektronendonator- und b) Pigmente mit Elektronenakzeptoreigenschaften, oder wenn man Pigmente mit Elektronendonator bzw. Elektronenakzeptoreigenschaften mit organischen Additiven mit Elektronendonator- bzw. Elektronenakzeptoreigenschaften, intensiv zusammenmahlt.

Zur Erzeugung von speziellen Pigmentformen ist es auch möglich, die Pigmentlegierungen in Wasser suspendiert und/oder in organischen Lösungsmitteln, vorzugweise in der Wärme und/oder gegebenenfalls bei verändertem Druck, nachzubehandeln.

Die erfindungsgemäss erhaltenen Pigmentlegierungen zeichnen sich im Gegensatz zu den herkömmlichen Pigmentmischungen durch günstigere physikalische und applikatorische Eigenschaften, insbesondere reinere und gleichmässigere Nuancen, hohere Farbstärke und Transparenz und höheren Glanz, bessere Dispergierbarkeit in Kunststoffen und Lacken aus. Da eine Entmischung im Gegensatz zu den konventionellen Mischungen nicht stattfinden kann, ist die Nuancenkonstanz gewährleistet. Gegenüber den Einzelpigmenten zeigen die Pigmentlegierungen ein wesentlich geringeres Kristallwachstum in organischen Lösungsmitteln und in vielen Fällen eine verbesserte Licht-, Wetter- und Hitzeechtheit.

Besonders hervorzuheben ist zudem die Wirtschaftlichkeit des erfindungsgemässen Verfahrens; es lassen sich mit Handelspigmenten auf einfache Art neue Pigmente mit bestimmten gewünschten Farbtönen herstellen.

In den nachfolgenden Beispielen bedeuten die Teile, sofern nichts anderes erwähnt, Gewichtsteile, die Prozente Gewichtsprozente und die Temperaturen sind in Celsiusgraden angegeben.

*Beispiel 1:*

a) 28 Teile des orangefarbigen Pigmentes I der Formel

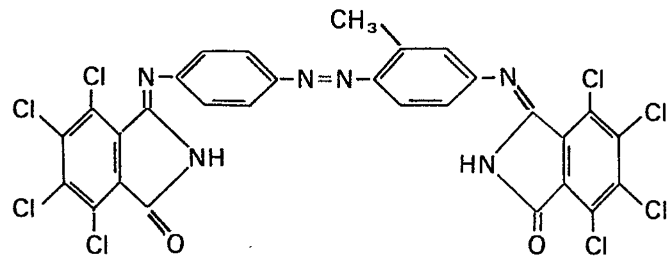

(I)

7 Teile Perylentetracarbonsäuredianhydrid(II) und 35 Teile feinteiliges Hexachloräthan werden in einer 2000 Vol.-Teile fassenden Glaspermühle in 630 Teilen Wasser suspendiert, mit 1900 Teilen Glaskugeln (Durchmesser: 4,5 bis 5,0 mm) bei einer Rührgeschwindigkeit von 320 tr/min unter Aussenkühlung mit Wasser während 24 h intensiv gemahlen. Dann werden die Glaskugeln von der Suspension abgetrennt und etwas mit Wasser nachgewaschen. In einem Rührgefäss wird das Hexachloräthan mittels einer Wasserdampfdestillation entfernt. Die Pigmentsuspension wird bei ca. 70° abfiltriert, der Presskuchen mit Wasser gewaschen, im Vakuumtrockenschrank bei 70 bis 80° getrocknet und pulverisiert. Man erhält 33,5 Teile einer Pigmentlegierung A, welche sich in Weich-PVC sehr gut dispergieren lässt und sehr farbstarke, reine, gleichmässige orangerote Walzfolien mit ausgezeichneten Echtheiten ergibt.

b) Man mahlt die Pigmente I und II getrennt, wie in 1a beschrieben, mit Hexachloräthan als Mahlhilfsmittel während 24 h, trennt die Glaskugeln ab, entfernt das Hexachloräthan durch Wasserdampfdestillation und filtriert die Pigmentsuspensionen ab. Werden die Presskuchen der separat gemahlenen Pigmente I und II im gleichen Gewichtsverhältnis, wie oben die Pulverpigmente, durch nochmaliges Anrühren in Wasser ohne weiteres Mahlen nur gut vermischt, abfiltriert, gewaschen und getrocknet, so erhält man eine Pigmentmischung B, welche im Vergleich zur Pigmentlegierung A beim Einarbeiten in Lacken und Kunststoffen eine wesentlich trübere Nuance und, in Weich-PVC-Walzfolien eingefärbt, deutlich sichtbare Streifen von rotem Perylenpigment zeigt.

c) Untersuchung des Rekristallisationsverhaltens: Je 1 Teil der beiden Pigmentmuster A und B werden separat in 30 Teilen o-Dichlorbenzol während 44 h bei 150-160° verrührt. In gewissen Zeitabständen werden Proben entnommen und die Kristallvergrösserung unter dem Lichtmikroskop beobachtet. Bei der Pigmentmischung B zeigt das Perylentetracarbonsäuredianhydrid in Funktion der Zeit ein stetig fortschreitendes starkes Kristallwachstum, während bei der Pigmentlegierung A ein sehr geringes, und nach 1 bis 3 h kein weiteres Kristallwachstum mehr beobachtet werden konnte.

*Beispiel 2:*

29,4 Teile C.I.-Pigment Gelb 110 (Isoindolinon) und 5,6 Teile Perylentetracarbonsäurediimid werden zusammen mit 35 Teilen feinteiligem Hexachloräthan nach dem in Beispiel 1a beschriebenen Verfahren gemahlen und aufgearbeitet. Man erhält 33,8 Teile einer braunen Pigmentlegierung, welche, eingefärbt in Weich-PVC-Walzfolien, braune, transparente, reine, gleichmässige und farbstarke Färbungen mit ausgezeichneten Echtheiten ergibt. Die Dispergierbarkeit der Pigmentlegierung ist ausgezeichnet. Dies ist überraschend, da das Perylentetracarbonsäurediimidpigment im reinen Zustand ausserordentlich schlecht in Kunststoffen dispergierbar ist. Die Pigmentlegierung zeigt zudem keinen Nachreibeeffekt beim Kaltwalzen der Weich-PVC-Folie. In Lacke eingefärbt zeigt sie sehr gute Echtheiten und hohen Glanz.

*Beispiel 3:*

30,8 Teile C.I.-Pigment Gelb 110 und 4,2 Teile Perylentetracarbonsäurediimid werden zusammen mit 3,9 Teilen feinteiliger hydrierter Abietinsäure (Staybelite Resin®, Fa. Hercules) in einer 2000 Vol.-Teile fassenden Glasperlmühle mit 1900 Teilen Glaskugeln (Durchmesser: 4,5 bis 5,0 mm) in 670 Teilen Wasser bei einer Rührgeschwindigkeit von ca. 320 tr/min unter Aussenkühlung mit kaltem Wasser während 9 h intensiv gemahlen. Man trennt die Glaskugeln von der Pigmentsuspension und wäscht sie mit etwas Wasser. Danach filtriert man die Pigmentsuspension ab, wäscht den Presskuchen mit Wasser, trocknet ihn bei 70 bis 80° im Vakuumtrockenschrank und pulverisiert das Pigment. Man erhält 37,8 Teile einer ca. 10% Staybelite Resin enthaltenden Pigmentlegierung, welche sich mit ausgezeichneter Dispergierbarkeit in Weich-PVC einfärben lässt und braune, transparente, reine, gleichmässig farbstarke Walzfolien mit sehr guten Echtheiten ergibt. Beim Kaltwalzen der Folien konnte kein Nachreibeeffekt festgestellt werden.

*Beispiel 4:*

195 Teile C.I.-Pigment Gelb 110, 5 Teile 2,9-Dichlorchinacridon werden in einem Rührgefäss zusammen mit 22,2 Teilen feinteiliger hydrierter Abietinsäure in 900 Teilen Wasser während 1 h gut verrührt. Die Pigmentsuspension wird mit Wasser bis auf ein Gewicht von 2000 Teilen verdünnt. In einer Dyno-Mühle, Typ KDL, der Fa. Willy A. Bachofen, Basel, versehen mit einem Stahlmahlbehälter von 600 Vol.-Teilen, gefüllt mit 480 bis 510 Vol.-Teilen Glaskugeln mit einem Durchmesser von 1 mm, wird die Pigmentsuspension bei einer Rührgeschwindigkeit von 3000 tr/min und einer Pumpengeschwindigkeit von 30 tr/min intensiv während 90 min gemahlen.

Die Pigmentsuspension wird von den Glaskugeln getrennt, welche mit 500 Teilen Wasser nachgewaschen werden. Man filtriert ab, wäscht den Presskuchen mit 1000 Teilen Wasser, trocknet im Vakuumtrockenschrank bei 70 bis 80° und pulverisiert das Pigment in einem Osterizer-Mixer. Man erhält 210 Teile einer ca. 10% hydrierte Abietinsäure enthaltenden Pigmentlegierung, welche gegenüber der konventionell hergestellten, also ungemahlenen Mischung, wesentlich reinere, gleichmässigere und farbstärkere rotstichig gelbe Färbungen beim Einarbeiten in Weich-PVC ergibt. Die Pigmentlegierung zeigt eine ausgezeichnete Dispergierbarkeit und kleinen Nachreibeeffekt beim Kaltwalzen der Folien. In Lacke eingefärbt erhält man Färbungen mit hohem Glanz und ausgezeichneten Echtheiten.

*Beispiel 5:*

Verfährt man analog wie in Beispiel 4 beschrieben, verwendet jedoch anstelle des 2,9-Dichlorchinacridons 2,5 Teile C.I.-Pigment Rot 177 (Anthrachinonderivat), so erhält man eine rotstichig gelbe Pigmentlegierung mit ebenso guten Eigenschaften.

*Beispiel 6:*

Verfährt man analog wie in Beispiel 4 beschrieben, verwendet jedoch anstelle des 2,9-Dichlorchinacridons 2,5 Teile 1,4,9,10-Tetrachlor-2,6-dimethoxytriphendioxazin, so erhält man eine rotstichig gelbe Pigmentlegierung mit ebenso guten Eigenschaften.

*Beispiel 7:*

Verfährt man analog wie in Beispiel 4 beschrieben, verwendet jedoch anstelle des 2,9-Dichlorchinacridons 2,5 Teile 2,9-Dimethylchinacridon, so erhält man eine rotstichig gelbe Pigmentlegierung mit ebenso guten Eigenschaften.

*Beispiel 8:*

Verfährt man analog wie in Beispiel 4 beschrieben, verwendet jedoch anstelle von Glaskugeln Polystyrolgranulat mit einem Durchmesser von 1 bis 1,5 mm, so erhält man eine rotstichig gelbe Pigmentlegierung mit ebenso guten Eigenschaften.

*Beispiel 9:*

In einer 500 Vol.-Teile fassenden Glaspermühle werden 12 Teile C.I.-Pigment Gelb 110, 3 Teile C.I.-Pigment Blau 15:3 (β-Cu-Phthalocyanin) und 1,7 Teile feinteilige hydrierte Abietinsäure in 130 Teilen Wasser während 30 min gut verrührt. Man gibt 400 Teile Glaskugeln mit einem Durchmesser von 3,5-4,0 mm zur Pigmentsuspension und mahlt die Pigmentmischung zusammen mit dem Harz während 8 h bei einer Rührgeschwindigkeit von 320 tr/min und unter Aussenkühlung mit Wasser. Die Pigmentsuspension wird von den Glaskugeln abgetrennt, welche mit etwas Wasser nachgewaschen werden, dann abfiltriert. Man wäscht den Presskuchen mit Wasser und trocknet ihn bei 70 bis 80° im Vakuumtrockenschrank. Man erhält 15,6 Teile einer grünen Pigmentlegierung, enthaltend ca. 10% hydrierte Abietinsäure, welche nach dem Pulverisieren, eingefärbt in Weich-PVC-Walzfolien, farbstarke, reine, transparente, gleichmässige flaschengrüne Färbungen mit sehr guten Echtheiten ergibt. Die Pigmentlegierung zeigt eine ausgezeichnete Dispergierbarkeit und keinen Nachreibeeffekt beim Kaltwalzen der Folien.

Gegenüber der auf konventionelle Art hergestellten Mischung mit gleichen Anteilen der einzeln gleich gemahlenen Pigmente, zeigt die Pigmentlegierung keine blauen Streifen des Phthalocyaninpigmentes in der PVC-Folie.

*Beispiel 10:*

Verfährt man analog wie in Beispiel 9 beschrieben, verwendet jedoch anstelle von 12 Teilen 13,5 Teile C.I.-Pigment Gelb 110, und anstelle von 3 Teilen 1,5 Teile C.I.-Pigment Blau 15:3, Nr. 74160, so erhält man eine Pigmentlegierung welche, eingefärbt in Kunststoffe und Lacke, hellgrüne Färbungen mit ebenso guten Eigenschaften ergibt.

*Beispiel 11:*

4,5 Teile C.I.-Pigment Braun 23 (Disazopigment) 10,5 Teile C.I.-Pigment Gelb 110 und 1,7 Teile feinteilige hydrierte Abietinsäure werden zusammen in einer Glasperlmühle während 30 min in 130 Teilen Wasser bei Raumtemperatur zunächst gut verrührt. Dann gibt man 400 Teile Glaskugeln mit einem Durchmesser von 3,5 bis 4,0 mm zur Pigmentsuspension und mahlt die Pigmentmischung zusammen mit dem Harz während 9 h bei einer Rührgeschwindigkeit von 320 tr/min und unter Aussenkühlung mit Wasser. Die gemahlene Pigmentsuspension wird von den Glaskugeln abgetrennt, welche mit Wasser nachgewaschen werden, dann abfiltriert. Man wächscht den Presskuchen mit Wasser und trocknet ihn bei 70 bis 80° im Vakuumtrockenschrank. Man erhält 15,6 Teile einer braunen Pigmentlegierung, enthaltend ca. 10% hydrierte Abietinsäure, welche nach dem Pulverisieren, eingefärbt in Weich-PVC-Walzfolien, farbstarke, reine, transparente, neutrale Braunfärbungen mit ausgezeichneten Echtheiten ergibt. Die Pigmentlegierung zeigt eine ausgezeichnete Dispergierbarkeit und keinen Nachreibeeffekt beim Kaltwalzen der Folien. Gegenüber der auf konventionelle Art hergestellten Mischung mit gleichen Anteilen der einzelnen Pigmente, zeigt die Pigmentlegierung in der PVC-Folie keine braunen Streifen des Disazopigmentes mehr.

*Beispiel 12:*

Verfährt man analog wie in Beispiel 11 beschrieben, verwendet jedoch anstelle von 4,5 Teilen C.I.-Pigment Braun 23 (Disazopigment) 13,5 Teile stabilisiertes α-Cu-Phthalocyaninpigment, und anstelle von 10,5 Teilen C.I.-Pigment Gelb 110, 1,5 Teile Perylentetracarbonsäurediimid, so erhält man eine Pigmentlegierung, welche beim Einfärben in Weich-PVC-Walzfolien sehr transparente, reine, sehr farbstarke, gleichmässig rotstichigblaue Färbungen mit ausgezeichneten Echtheiten ergibt. Es ist dies überraschend, da mit gleichen Pigmentanteilen von auf konventionelle Art hergestellten Pigmentmischungen, infolge der schlechten Dispergierbarkeit der einzelnen Pigmente, ungleichmässige und trübe Färbungen erhalten werden.

*Beispiel 13:*

Verfährt man analog wie in Beispiel 11 beschrieben, verwendet jedoch anstelle von 4,5 Teilen 12 Teile C.I.-Pigment Braun 23, und anstelle des C.I.-Pigment Gelb 110 3,0 Teile C.I.-Pigment Rot 88, Nr. 73312 (Tetrachlorthioindigo), und mahlt anstelle von 9 h 90 min, so erhält man eine Pigmentlegierung, welche, eingefärbt in Weich-PVC Walzfolien, farbstarke, reine, gleichmässig gefärbte rotstichigbraune Färbungen mit sehr guten Echtheiten ergibt. Gegenüber einer mit gleichen Pigmentanteilen aber auf konventionelle Art hergestellten Pigmentmischung ist die Pigmentlegierung besser dispergierbar und ergibt transparentere, reinere und farbstärkere Färbungen.

*Beispiel 14:*

5,0 Teile C.I.-Pigment Gelb 83 (Disazopigment), 9,0 Teile C.I.-Pigment Rot 144 (Disazopigment) und 1 Teil C.I.-Pigment Blau 15:3, Nr. 74160 (β-Cu-Phthalocyanin), werden zusammen mit 1,7 Teilen feinteiliger hydrierter Abietinsäure in 130 Teilen Wasser in einer 500 Vol.-Teile fassenden Glasperlmühle zunächst während 30 min gut verrührt. Dann gibt man 400 Teile Glaskugeln mit einem Durchmesser von 3,5 bis 4,0 mm zur Pigmentsuspension und mahlt die Pigmentmischung zusammen mit der beigefügten feinteiligen hydrierten Abietinsüure während 3 h bei einer Rührgeschwindigkeit von ca. 320 tr/min und unter Aussenkühlung mit Wasser. Die gemahlene Pigmentsuspension wird von den Glaskugeln abgetrennt, welche mit Wasser etwas nachgewaschen werden, und dann abfiltriert. Man wäscht den Presskuchen mit Wasser nach und trocknet ihn bei 70 bis 80° im Vakuumtrockenschrank. Nach dem Pulverisieren erhält man 15,9 Teile einer braunen, ca. 10% hydrierte Abietinsäure enthaltenden Pigmentlegierung, welche sich einwandfrei in DOP-Pasten einarbeiten lässt. Im Vergleich zu DOP-Pasten, bei welchen die einzelnen Pigmente separat eingemischt wurden, weisen die mit der Pigmentlegierung eingefärbten DOP-Pasten beim Applizieren wesentlich farbstärkere, reinere und vor allem nuancekonstante Färbungen auf.

*Beispiel 15:*

6 Teile des 1:2 Zinkkomplexes des Isoindolins der Formel

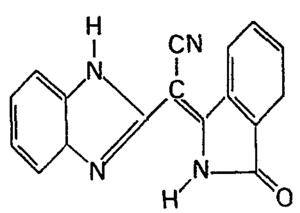

und 1,5 Teile des gelben Metallkomplexes der Formel

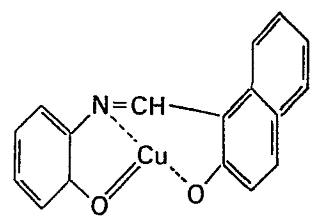

werden zusammen mit 7,5 Teilen feinteiligem Hexachloräthan während 24 h in einer 500 Vol.-Teile fassenden Glasperlmühle in 130 Teilen Wasser mit 400 Teilen Glaskugeln mit einem Durchmesser von 3,5 bis 4,0 mm bei einer Rührgeschwindigkeit von 320 tr/min und einer Aussenkühlung mit Wasser intensiv gemahlen. Dann werden die Glaskugeln von der Suspension abgetrennt und mit Wasser etwas nachgewaschen. In einem Rührgefäss wird das Hexachloräthan durch Einleiten von Wasserdampf in die Suspension abdestilliert. Die Pigmentsuspension wird bei ca. 70° abfiltriert, der Presskuchen mit Wasser gewaschen, im Vakuumtrockenschrank bei 70 bis 80° getrocknet und gepulvert. Man erhält 6,5 Teile einer Pigmentlegierung, welche, eingefärbt in Weich-PVC-Walzfolien, farbstarke, reine, transparente gelbe Färbungen mit wesentlich besseren Echtheiten als die auf konventionelle Art mit denselben Pigmentanteilen hergestellte Pigmentmischung ergibt.

*Beispiel 16:*

Verfährt man analog wie in Beispiel 15 beschrieben, verwendet jedoch anstelle von 7,5 Teilen Hexachloräthan 7,5 Teile Naphthalin Mahlhilfsmittel, welches anstelle der Wasserdampfdestillation durch Sublimation während des Trocknens des Pigmentpresskuchens abgetrennt wird, so erhält man eine Pigmentlegierung mit ebenso guten Eigenschaften.

*Beispiel 17:*

Verfährt man analog wie in Beispiel 15 beschrieben, verwendet jedoch anstelle von 7,5 Teile Hexachloräthan 7,5 Teile p-Dichlorbenzol als Mahlhilfsmittel, welches anstelle der Wasserdampfdestillation durch Sublimation während des Trocknens des Pigmentpresskuchens abgetrennt wird, so erhält man eine Pigmentlegierung mit ebenso guten Eigenschaften.

*Beispiel 18:*

8,0 Teile C.I.-Pigment Gelb 83, 6,0 Teile C.I.-Pigment Rot 144, 1 Teil C.I.-Pigment Blau 15:3, Nr. 74160, werden zusammen in einer 500 Vol.-Teile fassenden Glasperlmühle in 125 Teilen Wasser mit 400 Teilen Glaskugeln mit einem Durchmesser von 3,5 bis 4,0 mm bei einer Rührgeschwindigkeit von 320 tr/min und unter Aussenkühlung mit Wasser während 90 min intensiv gemahlen. Die gemahlene Pigmentsuspension wird von den Glaskugeln abgetrennt, welche mit Wasser etwas nachgewaschen werden, und dann abfiltriert. Man wäscht den Presskuchen mit Wasser nach, trocknet ihn bei 70 bis 80° im Vakuumtrockenschrank und pulverisiert das Trockengut. Man erhält 14 Teile einer braunen Pigmentlegierung,

welche sich einwandfrei in DOP-Pasten einarbeiten lässt. Im Vergleich zu DOP-Pasten, bei welchen die einzelnen Pigmente separat eingemischt werden, weisen die mit der Pigmentlegierung eingefärbten DOP-Pasten beim Applizieren wesentlich farbstärkere, reinere und vor allem nuancenkonstante Färbungen auf.

*Beispiel 19:*

5 Teile C.I.-Pigment Gelb 83, 9 Teile C.I.-Pigment Rot 144, 1 Teil C.I.-Pigment Blau 15:3, Nr. 74160, werden zusammen in einem 500 Vol.-Teile fassenden Becherglas in 85 Teilen Wasser mit 150 Vol.-Teilen Sand (Ottawa Sand mit einem Durchmesser von 2 bis 3 mm) mit einem Nylonscheibenrührer, bei einer Rührgeschwindigkeit von 2000 tr/min unter Aussenkühlung mit Wasser intensiv während 4 h gemahlen. Die gemahlene Pigmentsuspension wird vom Sand abgetrennt, welcher mit Wasser etwas nachgewaschen wird, dann abfiltriert. Man wäscht den Presskuchen mit Wasser nach, trocknet ihn bei 70 bis 80° im Vakuumtrockenschrank und pulverisiert das Trokkengut. Man erhält 14,4 Teile einer braunen Pigmentlegierung, welche, eingefärbt in Weich-PVC-Walzfolien, sehr farbstarke, gleichmässige Färbungen mit guten Echtheiten ergibt. Gegenüber einer auf konventionelle Art mit gleichen Pigmentanteilen hergestellten Mischung ergibt die Pigmentlegierung beim Applizieren farbstärkere, reinere und gleichmässigere, braune Färbungen.

*Beispiel 20:*

Verfährt man analog wie in Beispiel 11 beschrieben, verwendet jedoch anstelle von 1,7 Teilen hydrierter Abietinsäure 1,7 Teile feinteilige Stearinsäure, so erhält man 15,7 Teile einer ca. 10% Stearinsäure enthaltenden Pigmentlegierung mit ebensoguten Eigenschaften.

*Beispiel 21:*

6 Teile des in der dritten Ausgabe des Color Index registrierten Polyanthrimidpigmentes Vat Black 9 und 1,5 Teile des in der GB-PS Nr. 1415037 in Beispiel 138 durch Kondensation von 1 mol 4,4'-Dibrombenzophenon mit 2 mol 1-Amino-4-p-nitrophenylaminoanthrachinon hergestellten Anthrachinonpigmentes werden zusammen mit 7,5 Teile feinteiligem Hexachloräthan während 24 h in einer 500 Vol.-Teile fassenden Glasperlmühle in 130 Teilen Wasser mit 400 Teilen Glaskugeln mit einem Durchmesser von 3,5 bis 4,0 mm bei einer Rührgeschwindigkeit von 320 tr/min und einer Aussenkühlung mit Wasser intensiv gemahlen. Dann werden die Glaskugeln von der Suspension abgetrennt und mit Wasser etwas nachgewaschen. In einem Rührgefäss wird das Hexachloräthan durch Einleiten von Wasserdampf in die Suspension abdestilliert. Die Pigmentsuspension wird bei ca. 70° abfiltriert, der Presskuchen mit Wasser gewaschen, im Vakuumtrockenschrank bei 70 bis 80° getrocknet und gepulvert. Man erhält 6,5 Teile einer schwarzen Pigmentlegierung, welche nach der in der US-PS Nr. 4191566 beschriebenen Art ausgezeichnet als schwarzer Toner für elektrophotographische Abbildungsverfahren verwendet werden kann.

*Beispiel 22:*

5,4 Teile 1,5,9,10-Tetrachlor-2,6-dimethoxytriphendioxazin und 2,1 Teile Perylentetracarbonsäure-N,N'-bis-(3,5-dimethylphenyl)imid der γ-Modifikation werden zusammen mit 7,5 Teilen feinteiligem Hexachloräthan während 24 h in einer 500 Vol.-Teile fassenden Glasperlmühle in 130 Teilen Wasser mit 400 Teilen Glaskugeln mit einem Durchmesser von 3,5 bis 4,0 mm bei einer Rührgeschwindigkeit von 320 tr/min und einer Aussenkühlung mit Wasser intensiv gemahlen. Dann werden die Glaskugeln von der Suspension abgetrennt und mit Wasser etwas nachgewaschen. In einem Rührgefäss wird das Hexachloräthan durch Einleiten von Wasserdampf in die Suspension abdestilliert. Die Pigmentsuspension wird bei ca. 70° abfiltriert, der Presskuchen mit Wasser gewaschen, im Vakuumtrockenschrank bei 70 bis 80° getrocknet und gepulvert. Man erhält 6,6 Teile einer magentafarbigen Pigmentlegierung, welche nach der in der US-PS Nr. 4191566 beschriebenen Art ausgezeichnet als Magentatoner für elektrophotographische Abbildungsverfahren verwendet werden kann. Gegenüber der auf konventionelle Art hergestellten Pigmentmischung, bestehend aus den oben ausgeführten 5,4 Teilen Dioxazin- und 2,1 Teilen Perylenpigment, weist die erfindungsgemäss hergestellte Pigmentlegierung eine signifikant höhere photoelektrophoretische Empfindlichkeit auf.

*Beispiel 23:*

13,2 Teile grobkristallines β-Cu-Phthalocyaninpigment und 1,8 Teile Chloranil werden zusammen in einer 500 Vol.-Teile fassenden Glasperlmühle in 125 Teilen Wasser mit 400 Teilen Glaskugeln mit einem Durchmesser von 3,5 bis 4,0 mm bei einer Rührgeschwindigkeit von 320 tr/min und unter Aussenkühlung mit Wasser während 24 h intensiv gemahlen. Die gemahlene Pigmentsuspension wird von den Glaskugeln abgetrennt, welche mit Wasser etwas nachgewaschen werden, und dann abfiltriert. Man wäscht den Presskuchen mit Wasser nach, trocknet ihn bei Raumtemperatur im Exsikkator über konzentrierte Schwefelsäure bis zur Gewichtskonstanz und pulverisiert das Trockengut. Man erhält 14 Teile einer blauen Mischung A, deren Halbleitereigenschaften durch Messung des elektrischen Widerstandes untersucht wurde.

Im Vergleich wurde die elektrische Widerstandmessung am reinen Cu-Phthalocyaninpigment C sowie an einer auf übliche Art durch 20minütiges Mischen von feinteiligem Cu-Phthalocyaninpigment mit Chloranil in einem Turbulamischer der Fa. Willy A. Bachofen, Basel, erhaltenen Pulvermischung derselben prozentualen Zusammensetzung B, vorgenommen.

Die an den komprimierten Pulvern gemessenen elektrischen Widerstände (ρ*) ergaben folgendes Resultat:

| | |
|---|---|
| legierte Probe (A) | $8{,}5 \cdot 10^5$ |

| | |
|---|---|
| Mischung (B) | $4{,}4 \cdot 10^8$ |
| Cu-Phthalocyaninpigment (C) | $4{,}9 \cdot 10^{10}$ |

* Spezifischer elektrischer Widerstand: ± 0,3 Ωcm bei 25°C.

Der spezifische Widerstand der legierten Probe A liegt um mehrere Zehnerpotenzen tiefer als derjenige der Vergleichsproben. Durch die intensive Mahlung der Donorkomponente (Cu-Phthalocyanin) und der Akzeptorkomponente (Chloranil) gelang es, eine Charge/Transfer-Verbindung mit Halbleitereigenschaften herzustellen.

*Beispiel 24:*

In einer 500 Vol.-Teile fassenden Glasperlmühle werden 12 Teile grobkristallines β-Cu-Phthalocyaninpigment, 3 Teile Carbazoldioxazin (C.I.-Pigment Violett 23) und 1,7 Teile feinteilige hydrierte Abietinsäure in 130 Teilen Wasser zunächst während 30 min gut verrührt. Dann gibt man 400 Teile Glaskugeln mit einem Durchmesser von 3,5 bis 4,0 mm zur Pigmentsuspension und mahlt die Pigmentmischung zusammen mit dem Harz während 5 h bei einer Rührgeschwindigkeit von 320 tr/min und unter Aussenkühlung mit Wasser. Die Pigmentsuspension wird von den Glaskugeln abgetrennt, welche mit etwas Wasser nachgewaschen werden, und dann abfiltriert. Man wäscht den Presskuchen mit Wasser und trocknet ihn bei 70 bis 80° im Vakuumtrockenschrank. Man erhält 15,7 Teile einer ca. 10% hydrierte Abietinsäure enthaltenden blauen Pigmentlegierung, welche nach dem Pulverisieren, eingefärbt in Lacke und Kunststoffe, farbstarke, reine blaue Färbungen ergibt. Die Dispergierbarkeit in Weich-PVC-Walzfolien ist ausgezeichnet.

*Beispiel 25:*

Verfährt man analog wie in Beispiel 11 beschrieben, verwendet jedoch anstelle von 4,5 Teilen 7,5 Teile C.I.-Pigment Braun 23 und anstelle von 10,5 Teilen 7,5 Teile C.I.-Pigment Gelb 110, so erhält man eine Pigmentlegierung, welche, eingefärbt in Hart-PVC-Fensterprofile, neutrale Braunfärbungen mit ausgezeichneten Wetterbeständigkeiten ergibt.

*Beispiel 26:*

Eine Mischung von 130 Teilen Steatitkugeln von 8 mm Durchmesser, 47,5 Teilen Alkydmelamineinbrennlack, bestehend aus 60 Teilen Beckosol 27-320®, 60% in Xylol (Reichhold Chemie AG), 36 Teilen Super-Beckamin 13-501®, 50% in einem 1:1 Gemisch von Xylol und Butanol (Reichhold Chemie AG), 2 Teilen Xylol und 2 Teilen Äthylenglykolmonomethyläther, und 2,5 Teilen der nach Beispiel 1 erhaltenen Pigmentlegierung wird in einer 200 ml Glasflasche mit *twist-off*-Verschluss während 120 h auf einem Rollgestell dispergiert. Nach Abtrennen der Steatitkugeln werden 2,4 Teile der so dispergierten Volltonmischung und 6,0 Teile Titandioxid Kronos RN 59® (Kronos Titan GmbH) mit 24,0 Teilen des obigen Alkydmelamineinbrennlacks vermischt, auf Aluminiumbleche gespritzt und anschliessend während 30 min bei 130° eingebrannt. Man erhält orangerotene Färbungen mit ausgezeichneten Echtheiten.

*Beispiel 27:*

Eine Mischung von 1,0 Teil der nach Beispiel 4 erhaltenen Pigmentlegierung, 1,0 Teil Antioxydans Irganox 1010® (Ciba-Geigy AG) und 1000,0 Teilen Polyäthylen-HD-Granulat Vestolen A 60-16® (Fa. Hüls) wird während 15 min in einer Glasflasche auf einer Rollbank vorgemischt. Danach wird die Mischung in zwei Passagen auf einem Einwellenextruder extrudiert und granuliert, das so erhaltene Granulat auf einer Spritzgussmaschine (Allround Aarburg 200) bei 220° zu Platten verspritzt und während 5 min bei 180° nachgepresst. Die Pressplatten weisen farbstarke rotstichiggelbe Nuancen mit ausgezeichneten Echtheiten auf.

*Beispiel 28:*

Verwendet man anstelle von 1,0 Teil der reinen Pigmentlegierung 2,0 Teile eines 50%igen Pigmentpräparates, bestehend aus 1,0 Teil der nach Beispiel 4 erhaltenen Pigmentlegierung und 1,0 Teil Mg-Behenat, verfährt sonst nach der in Beispiel 27 beschriebenen Weise, so erhält man rotstichiggelbe Pressplatten mit ebenso guten Eigenschaften.

*Beispiel 29:*

Für die Färbung von PVC wird eine Mischung von 65 Teilen stabilisiertem PVC, 35 Teilen Dioctylphtalat und 0,2 Teilen der nach Beispiel 12 erhaltenen Pigmentlegierung hergestellt und zwischen zwei Rollen eines Kalanders bei ca. 150° während 5 min hin- und herbewegt. Die so erhaltene Weich-PVC-Folie weist eine transparente, reine rotstichigblaue Färbung mit ausgezeichneten Lichtechtheiten auf.

*Beispiel 30:*

Eine Mischung von

| | | |
|---|---|---|
| 92,0 | Teilen Vinylharz Vinnol H65D® | (Wacker, München) |
| 8,0 | Teilen Vinylcopolymerisat Vestolit HIS 7587® | (Hüls) |
| 1,5 | Teilen Weichmacher Reoplast 39® | (Ciba-Geigy AG) |
| 1,4 | Teilen Stabilisator Irgastab BC-10® | » |
| 1,4 | Teilen Stabilisator Irgastab BC-29® | » |
| 0,7 | Teilen Hilfsstabilisator Irgastab CH-300® | » |
| 0,4 | Teilen Gleitmittel Irgawax 370® | » |
| 0,2 | Teilen Gleitmittel Irgawax 360® | » |
| 0,25 | Teilen Lichtschutzmittel Tinuvin 320® | » |

wird in einem Fluidmischer (Fa. Papenmeier K.G., Detmold) durch Verrühren innert ca. 5 min bei einer Geschwindigkeit von 1400 tr/min hergestellt.

1,5 Teile der so hergestellten Hart-PVC-Mischung und 0,075 Zeile der nach Beispiel 11 hergestellten Pigmentlegierung werden in einem Henschelmischer (Henschelwerke GmbH., Kassel) bei einer Geschwindigkeit von ca. 2000 tr/min bei Raumtemperatur während ca. 3 min vermischt.

Auf einem Mischwalzwerk wird die so pigmentierte Hart-PVC-Mischung bei 190° während 6 min mit 25 tr/min und einer Friktion von 1:1,2 gewalzt und bei 190° während 6 min auf einer Bürkle-Presse zwischen verchromten Stahlplatten in einer Schichtdicke von ca. 1 mm verpresst. Man erhält einen gleichmässig braungefärbten Pressling, der eine hervorragende Licht- und Wetterechtheit aufweist.

## Patentansprüche

1. Verfahren zur Herstellung von Pigmentlegierungen, dadurch gekennzeichnet, dass man eine Mischung, bestehend aus mindestens zwei sich durch wesentliche Strukturmerkmale unterscheidenden Pigmenten verschiedener Gruppen der Perylen-, Phthalocyanin-, Perinon-, Chinacridon-, Chinophthalon-, Isoindolinon-, Isoindolin-, Dioxazin-, Anthrachinoid-, Thioindigo-, Azo-, Methin- oder Azomethinreihe, einer intensiven Nassmahlung in Wasser unterwirft.

2. Verfahren gemäss Anspruch 1, dadurch gekennzeichnet, dass auf 100 Gew.-Teile der Pigmentmischung 0,1-50 Gew.-Teile des Pigmentes der einen Gruppe und 50-99,9 Gew.-Teile von mindestens einem Pigment der anderen Gruppe verwendet werden.

3. Verfahren gemäss Anspruch 1, dadurch gekennzeichnet, dass man die Nassmahlung in Gegenwart eines zu entfernenden Mahlhilfsmittels durchführt.

4. Verfahren gemäss Anspruch 3, dadurch gekennzeichnet, dass man als Mahlhilfsmittel Hexachloräthan verwendet.

5. Verfahren gemäss Anspruch 3, dadurch gekennzeichnet, dass man 0,5-1,5 Gew.-Teile des Mahlhilfsmittels auf 1 Gew.-Teil der Pigmentmischung verwendet.

6. Verfahren gemäss Anspruch 3, dadurch gekennzeichnet, dass man nach der Mahlung das Mahlhilfsmittel durch Wasserdampfdestillation oder Sublimation entfernt.

7. Verfahren gemäss Anspruch 1, dadurch gekennzeichnet, dass man die Nassmahlung in Gegenwart eines im Produkt verbleibenden Mahlhilfsmittels durchführt.

8. Verfahren gemäss Anspruch 7, dadurch gekennzeichnet, dass man als im Produkt verbleibendes Mahlhilfsmittel 0,01 bis 0,15 Gew.-Teile eines organischen Additivs auf 1 Gew.-Teil Pigmentmischung verwendet.

9. Verfahren gemäss Anspruch 8, dadurch gekennzeichnet, dass man als organisches Additiv Abietinsäure, hydrierte Abietinsäure oder Stearinsäure verwendet.

10. Verwendung der gemäss Anspruch 1 erhaltenen Pigmentlegierung als Toner in der Elektrophotographie, als elektrischer Halbleiter und als Absorptionspigmente in Solarzellen.

11. Hochmolekulares organisches Material enthaltend eine Pigmentlegierung gemäss Anspruch 1.

## Claims

1. Process for the production of pigment alloys, characterised in that a mixture consisting of at least two pigments differing from one another by essential structural features and being from different groups of the perylene, phthalocyanine, perinone, quinacridone, quinophthalone, isoindolinone, isoindoline, dioxazine, anthraquinoid, thioindigo, azo, methine and azomethine series is subject to thorough wet-grinding in water.

2. Process according to claim 1, characterised in that are used 0.1-50 parts by weight of the pigment of the one group and 50-99.9 parts by weight of at least one pigment of the other group per 100 parts by weight of the pigment mixture.

3. Process according to claim 1, characterised in that wet-grinding is carried out in the presence of a grinding auxiliary that is to be subsequently removed.

4. Process according to claim 3, characterised in that hexachloroethane is used as grinding auxiliary.

5. Process according to claim 3, characterised in that 0.5-1.5 parts by weight of the grinding auxiliary are used to one part by weight of the pigment mixture.

6. Process according to claim 3, characterised in that the grinding auxiliary is removed by steam distillation or sublimation after the grinding operation.

7. Process according to claim 1, characterised in that wet-grinding is carried out in the presence of a grinding auxiliary remaining in the product.

8. Process according to claim 7, characterised in that there is used, as grinding auxiliary remaining in the product, 0.01 to 0.15 part by weight of an organic additive to 1 part by weight of the pigment mixture.

9. Process according to claim 8, characterised in that the organic additive used is abietic acid, hydrogenated abietic acid or stearic acid.

10. Use of the pigment alloys obtained according to claim 1 as toners in electrophotography, as electrical semiconductors and as absorption pigments in solar cells.

11. High-molecular organic material containing a pigment alloy according to claim 1.

## Revendications

1. Procédé de préparation d'alliages de pigments, caractérisé en ce que l'on soumet à un broyage intensif dans de l'eau un mélange d'au moins deux pigments qui diffèrent par des caractéristiques de structure essentielles, de divers

groupes des séries du pérylène, des phtalocyanines, des périnones, des quinacridones, des quinophtalones, des iso-indolinones, des iso-indolines, des dioxazines, des anthraquinoïdes, des thio-indigo et de la série azoïque, méthinique ou azométhinique.

2. Procédé selon la revendication 1, caractérisé en ce que pour 100 parties en poids du mélange de pigments, on utilise 0,1 à 50 parties en poids du pigment de l'un des groupes et 50 à 99,9 parties en poids d'un ou de plusieurs pigments de l'autre groupe.

3. Procédé selon la revendication 1, caractérisé en ce que l'on effectue le broyage en milieu humide en présence d'un auxiliaire de broyage qui est ensuite éliminé.

4. Procédé selon la revendication 3, caractérisé en ce que l'on utilise l'hexachloroéthane comme auxiliaire de broyage.

5. Procédé selon la revendication 3, caractérisé en ce que l'on ajoute 0,5 à 1,5 partie en poids de l'auxililiaire de broyage par partie en poids du mélange de pigments.

6. Procédé selon la revendication 3, caractérisé en ce que, après le broyage, on élimine l'auxiliaire de broyage par entraînement (distillation) à la vepeur d'eau ou par sublimation.

7. Procédé selon la revendication 1, caractérisé en ce que l'on effectue le broyage en milieu humide en présence d'un auxiliaire de broyage qui reste dans le produit obtenu.

8. Procédé selon la revendication 7, caractérisé en ce que l'on ajoute, comme auxiliaire de broyage devant rester dans le produit, 0,01 à 0,15 partie en poids d'un additif organique par partie en poids du mélange de pigments.

9. Procédé selon la revendication 8, caractérisé en ce que l'on emploie, comme additif organique, l'acide abiétique, l'acide abiétique hydrogéné ou l'acide stéarique.

10. Utilisation des alliages de pigments qui ont été obtenus suivant la revendication 1 comme nuanceurs en électrophotographie, comme semiconducteurs et comme pigments d'absorption lumineuse dans des cellules solaires.

11. Matières organiques macromoléculaires contenant un alliage de pigments selon la revendication 1.